# EUROPÄISCHE PATENTANMELDUNG

(11) **EP 3 822 227 A1**
(43) Veröffentlichungstag der Anmeldung: **19.05.2021**
(21) Anmeldenummer: 20206896.1
(22) Anmeldetag: 11.11.2020
(51) Int. Cl.: C02F 1/00, C02F 1/469

(54) **VERFAHREN UND VORRICHTUNG ZUM KAPAZITIVEN DEIONISIEREN VON WASSER**

(30) Priorität: 13.11.2019 DE 102019217482
(71) Anmelder: Robert Bosch GmbH, 70442 Stuttgart (DE)
(72) Erfinder: Widmaier, Mathias, 71106 Magstadt (DE); Steiner, Dietmar, 73642 Welzheim (DE); Mielcarek, Paul, 72667 Schlaitdorf (DE); Bommer, Lars, 71229 Leonberg (DE); Wang, Ganzhou, 71229 Leonberg (DE)

(57) **Zusammenfassung**

Die Erfindung betrifft ein Verfahren zum kapazitiven Deionisieren von Wasser, wobei eine Art und/oder eine Konzentration von im Wasser vorhandenen Ionen detektiert wird und wobei eine Betriebsstrategie einer Vorrichtung zum kapazitiven Deionisieren von Wasser anhand der Art und/oder der Konzentration der im Wasser vorhandenen Ionen ausgewählt wird.

Des Weiteren betrifft die Erfindung eine Vorrichtung zum kapazitiven Deionisieren von Wasser, aufweisend einen Sensor, zwei Elektroden und ein Steuergerät, wobei mit dem Sensor eine Art und/oder eine Konzentration von im Wasser vorhandenen Ionen detektiert werden kann, wobei an die Elektroden eine Spannung angelegt werden kann, wobei das Steuergerät eingerichtet ist, anhand der mittels des Sensors ermittelten Art und/oder Konzentration der im Wasser vorhandenen Ionen eine Betriebsstrategie auszuwählen.

## Beschreibung

Die Erfindung betrifft ein Verfahren zum kapazitiven Deionisieren von Wasser und eine Vorrichtung zum kapazitiven Deionisieren von Wasser.

### Stand der Technik

Beim kapazitiven Deionisieren von Wasser wird Wasser durch einen Plattenkondensator geleitet. Durch eine am Plattenkondensator angelegte Spannung werden im Wasser gelöste Ionen in Richtung der Platten beziehungsweise Elektroden des Plattenkondensators bewegt. Sobald die Ionen die Elektroden des Plattenkondensators treffen, werden sie entladen und lagern sich an den Elektroden an. Die Elektroden können periodisch regeneriert werden, wobei dazu eine an die Elektroden angelegte Spannung reversiert werden kann und somit die zuvor angelagerten Ionen wieder geladen werden und wieder in das Wasser abgegeben werden. Das dabei durch den Plattenkondensator fließende Wasser, das nun wieder Ionen enthält, wird als Abwasser verworfen. Durch entsprechende Wahl der Zeiträume, in denen der Plattenkondensator derart betrieben wird, dass er dem Wasser Ionen entzieht, und derart, dass er die angelagerten Ionen wieder an das Wasser abgibt, kann erreicht werden, dass eine große Menge Wasser mit geringerer lonenkonzentration und eine kleine Menge Wasser mit deutlich erhöhter lonenkonzentration erzeugt wird.

Ein Hauptproblem der aus dem Stand der Technik bekannten Technologie zum kapazitiven Deionisieren von Wasser ist eine starke Belastung und damit einhergehend Degradation von kohlenstoffbasierten Elektroden im Wasserstrom. Durch Oxidation der Oberfläche sowie durch zunehmende Verkalkung und damit einhergehende Verstopfung der Poren geht Kapazität verloren, bis schließlich keine Deionisation mehr stattfindet. Die derzeit verwendeten kohlenstoffbasierten Elektroden werden also im Betrieb angegriffen, bis hin zu einer vollständigen Zerstörung.

Zur Lösung dieses Problems sind in heutigen Systemen lonenaustauschmembranen sowie Reinigungszyklen mit Zitronensäure-Additiven bekannt. Beide Möglichkeiten sind jedoch aufwändig und teuer.

### Offenbarung der Erfindung

Eine Aufgabe der Erfindung ist es, ein Verfahren zum kapazitiven Deionisieren von Wasser bereitzustellen, mit dem eine Lebensdauer von Elektroden beziehungsweise einer Vorrichtung zum kapazitiven Deionisieren von Wasser verlängert werden kann. Eine weitere Aufgabe der Erfindung ist es, eine Vorrichtung zum kapazitiven Deionisieren von Wasser bereitzustellen, mit der das Verfahren umgesetzt werden kann.

Diese Aufgaben werden mit dem Verfahren und der Vorrichtung der unabhängigen Patentansprüche gelöst. Vorteilhafte Weiterbildungen sind in den abhängigen Patentansprüchen angegeben.

Ein Verfahren zum kapazitiven Deionisieren von Wasser kann wie folgt durchgeführt werden: Zunächst wird eine Art und/oder eine Konzentration von im Wasser vorhandenen Ionen detektiert. Anschließend wird eine Betriebsstrategie einer Vorrichtung zum kapazitiven Deionisieren von Wasser anhand der Art und/oder der Konzentration der im Wasser vorhandenen Ionen ausgewählt.

Vorrichtungen zum kapazitiven Deionisieren von Wasser können mit unterschiedlichen Betriebsstrategien betrieben werden. Diese unterschiedlichen Betriebsstrategien können unterschiedlichen Einfluss auf die Degradation von Elektroden der Vorrichtung zum kapazitiven Deionisieren von Wasser haben. Ferner kann es sein, dass bestimmte Ionen beziehungsweise bestimmte Konzentrationen von Ionen nur mit bestimmten Betriebsstrategien aus dem Wasser entfernt werden können. Können beispielsweise Ionen im Wasser sein, deren Entfernung eine Betriebsstrategie erfordert, welche eine starke Degradation der Elektroden der Vorrichtung zum kapazitiven Deionisieren von Wasser zur Folge hat, so ist es vorteilhaft, wenn diese Betriebsstrategie nur angewendet wird, wenn solche Ionen auch tatsächlich im Wasser vorhanden sind. Dies kann beispielsweise dadurch erfolgen, dass die Art der im Wasser vorhandenen Ionen detektiert wird und die entsprechende, eine starke Zerstörung der Elektroden zur Folge habende Betriebsstrategie nur dann gewählt wird, wenn diese Ionen im Wasser vorhanden sind. Sind diese Ionen nicht im Wasser vorhanden, kann eine weniger aggressive Betriebsstrategie, also eine Betriebsstrategie, die eine weniger starke Degradation der Elektroden zur Folge hat, gewählt werden.

In einer Ausführungsform des Verfahrens umfasst die Betriebsstrategie einen Stromverlauf und/oder einen Spannungsverlauf und/oder einen maximalen Strom und/oder eine maximale Spannung. Es kann beispielsweise sein, dass unterschiedliche Ionen eine unterschiedliche an den Elektroden angelegte Spannung benötigen, um während dem kapazitiven Deionisieren aus dem Wasser entfernt zu werden. Je nach Art der detektierten Ionen kann also eine unterschiedliche maximale Spannung an den Elektroden angelegt werden, wobei dann die Betriebsstrategie diese maximale Spannung umfasst. Es kann außerdem sein, dass bestimmte Ionen nur dann aus dem Wasser entfernt werden können, wenn eine bestimmte Stromdichte zur Verfügung steht. Dies kann über einen maximalen Strom als Betriebsstrategie umgesetzt werden. Neben maximalen Werten von Strom und Spannung kann es auch sein, dass die Entfernung von bestimmten Ionen bei einem bestimmten Spannungs- und/oder Stromverlauf besonders gut funktioniert und entsprechend ein Strom- oder Spannungsverlauf als Betriebsstrategie ausgewählt werden.

In einem Ausführungsbeispiel umfasst die Betriebsstrategie eine Festlegung von Länge und/oder Häufigkeit eines Reinigungszyklus. Dies kann beispielsweise nach der Konzentration der detektierten Ionen erfolgen, da eine höhere Konzentration auch höhere Ablagerungen an den Elektroden zur Folge hat. Ferner kann es auch sein, dass bestimmte Ionen die Elektroden stärker beeinflussen und entsprechend ein anderer beziehungsweise ein häufiger auftretender Reinigungszyklus verwendet werden muss.

In einer Ausführungsform des Verfahrens wird eine an Elektroden der Vorrichtung zum kapazitiven Deionisieren von Wasser angelegte Spannung anhand der Art der im Wasser gelösten Ionen ausgewählt. Dadurch kann vorteilhafterweise so viel Spannung wie nötig, um diese Ionen aus dem Wasser zu entfernen, angelegt werden, wobei ein Anlegen einer niedrigeren Spannung für bestimmte Ionen eine längere Lebensdauer aufgrund einer weniger starken Degradation der Elektroden zur Folge hat.

In einer Ausführungsform des Verfahrens ist die angelegte Spannung indirekt proportional zur spezifischen Ladung der im Wasser gelösten Ionen. Je kleiner die spezifische Ladung der im Wasser gelösten Ionen ist, umso größer muss eine angelegte Spannung sein, damit auf alle Ionen unabhängig von ihrer spezifischen Ladung eine identische Kraft wirkt, die dazu führt, dass Ionen über eine Ausdehnung eines Plattenkondensators zu den Elektroden geleitet werden. In dieser Ausführungsform kann es also vorgesehen sein, dass die angelegte Spannung anhand der kleinsten spezifischen Ladung der im Wasser gelösten Ionen ausgewählt wird.

In einer Ausführungsform des Verfahrens ist die angelegte Spannung direkt proportional zur Masse der im Wasser gelösten Ionen. Je schwerer die Ionen sind, umso größer muss eine auf die Ionen wirkende Kraft sein, damit die Ionen innerhalb eines Plattenkondensators zu den Elektroden bewegt werden können. Dies kann dadurch erreicht werden, dass die angelegte Spannung anhand der Masse der schwersten Ionen ausgewählt wird.

In einer Ausführungsform des Verfahrens wird die Art und/oder die Konzentration der im Wasser vorhandenen Ionen nach Ablauf einer vorgegebenen Zeitspanne erneut detektiert. Die Betriebsstrategie der Vorrichtung zum kapazitiven Deionisieren von Wasser wird anhand der Art und/oder der Konzentration der im Wasser vorhandenen Ionen nach Ablauf der vorgegebenen Zeitspanne angepasst. Dadurch wird ein kontinuierlicher Betrieb der Vorrichtung zum kapazitiven Deionisieren von Wasser ermöglicht, bei dem beispielsweise zunächst das Vorhandensein von Ionen, die eine hohe Spannung benötigen, um aus dem Wasser entfernt zu werden, detektiert wird. Nach der vorgegebenen Zeitspanne kann es sein, dass diese Ionen nicht mehr detektiert werden und deshalb die angelegte Spannung beispielsweise reduziert werden kann. Gleichermaßen können alle anderen oben beschriebenen Zusammenhänge an dieser Stelle erneut überprüft werden.

Eine Vorrichtung zum kapazitiven Deionisieren von Wasser weist einen Sensor, zwei Elektroden und ein Steuergerät auf. Mit dem Sensor kann eine Art und/oder eine Konzentration von im Wasser vorhandenen Ionen detektiert werden. An die Elektroden kann eine Spannung angelegt werden. Das Steuergerät ist eingerichtet, eine Betriebsstrategie anhand der mittels des Sensors ermittelten Art und/oder Konzentration der im Wasser vorhandenen Ionen auszuwählen. Das Steuergerät kann hierzu eine Recheneinheit und verschiedene Betriebsstrategien, die in einem Speicher abgelegt sind, aufweisen. Dabei kann es sein, dass den im Speicher abgelegten Betriebsstrategien Arten und Konzentrationen von Ionen zugeordnet sind und die Recheneinheit anhand dieses Zusammenhangs entsprechende Betriebsstrategien auswählt.

In einer Ausführungsform umfasst die Betriebsstrategie einen Stromverlauf und/oder einen Spannungsverlauf und/oder einen maximalen Strom und/oder eine maximale Spannung. Das Steuergerät ist eingerichtet, an die Elektroden eine Spannung derart anzulegen, dass der Stromverlauf und/oder der Spannungsverlauf und/oder der maximale Strom und/oder die maximale Spannung an den Elektroden anliegt.

In einer Ausführungsform ist das Steuergerät eingerichtet, eine Festlegung von einer Länge und/oder einer Häufigkeit eines Reinigungszyklus zu treffen und den Reinigungszyklus entsprechend durchzuführen.

Die Erfindung umfasst ferner ein Computerprogramm, welches ausgeführt auf einem Computer diesen dazu veranlasst, das erfindungsgemäße Verfahren auszuführen. Ein solches Computerprogramm kann beispielsweise auf das Steuergerät der Vorrichtung zum kapazitiven Deionisieren von Wasser aufgespielt sein. Ferner umfasst die Erfindung ein maschinenlesbares Speichermedium, auf dem ein solches Computerprogramm gespeichert ist.

Ausführungsbeispiele der Erfindung werden anhand der folgenden Zeichnungen erläutert. In der schematischen Zeichnung zeigen:
- Fig. 1: eine Vorrichtung zum kapazitiven Deionisieren von Wasser;
- Fig. 2: ein Ablaufdiagramm eines Verfahrens zum kapazitiven Deionisieren von Wasser; und
- Fig. 3: einen Konzentrationsverlauf eines ersten Ions, einen Konzentrationsverlauf eines zweiten Ions und einen Spannungsverlauf.

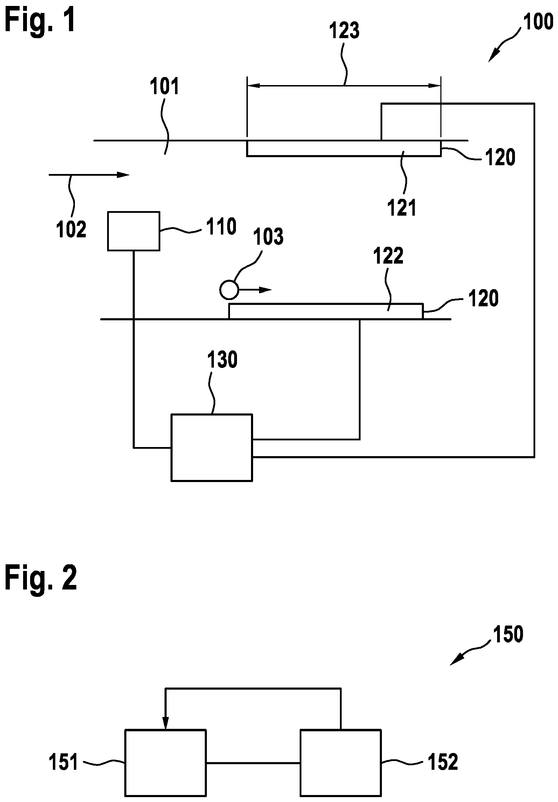

Fig. 1 zeigt eine Vorrichtung 100 zum kapazitiven Deionisieren von Wasser, die einen Sensor 110, zwei Elektroden 120 und ein Steuergerät 130 aufweist. Innerhalb der Vorrichtung 100 ist ein Fließkanal 101 angeordnet, innerhalb dessen sich Wasser in Fließrichtung 102 bewegen kann. Ebenfalls innerhalb des Fließkanals 101 sind die Elektroden 120 und der Sensor 110 angeordnet. Der Sensor 110 ist dabei in Fließrichtung 102 vor den Elektroden 120 angeordnet.

Die Elektroden 120 können auch als erste Elektrode 121 und zweite Elektrode 122 bezeichnet werden. Der Sensor 110 ist eingerichtet, eine Art und/oder eine Konzentration von im Wasser vorhandenen Ionen zu detektieren. Hierzu kann es sein, dass der Sensor 110 unterschiedliche Bereiche definierter Porenstruktur und Porengröße aufweist, wobei aufgrund der unterschiedlich großen Poren unterschiedliche Ionen mit den unterschiedlichen Bereichen des Sensors 110 wechselwirken und beispielsweise größere Ionen nur von größeren Poren aufgenommen werden können. Ferner kann es vorgesehen sein, die Porenstrukturen mit bestimmten Potentialen zu beaufschlagen, nach denen eine Wechselwirkung mit bestimmten Ionen ebenfalls selektiv erfolgt. Solche Sensoren sind aus dem Stand der Technik bekannt.

Das Steuergerät 130 ist eingerichtet, anhand der mittels des Sensors 110 ermittelten Art und/oder Konzentration der im Wasser vorhandenen Ionen eine Betriebsstrategie auszuwählen. Die Auswahl der Betriebsstrategie kann beispielsweise dazu führen, dass mittels des Steuergeräts 130 eine bestimmte Spannung an die Elektroden 120 angelegt wird. In Fig. 1 ist dargestellt, dass der Sensor 110 und die Elektroden 120 jeweils mit einer Verbindung mit dem Steuergerät 130 verbunden sind. In diesem Ausführungsbeispiel ist also das Steuergerät 130 eingerichtet, direkt eine Spannung auszugeben, die an die Elektroden 120 angelegt werden kann. Es kann alternativ vorgesehen sein, dass der Sensor 110 eine Datenübertragung mittels Funkverbindung vornimmt. Ferner kann es vorgesehen sein, dass die Elektroden 120 an eine (nicht gezeigte) ansteuerbare Spannungsquelle angeschlossen sind und das Steuergerät 130 ein entsprechendes Steuersignal an die Spannungsquelle ausgibt.

Es kann vorgesehen sein, dass die Betriebsstrategie einen Stromverlauf und/oder einen Spannungsverlauf und/oder einen maximalen Strom und/oder oder eine maximale Spannung umfasst und das Steuergerät 130 eingerichtet ist, an die Elektroden 120 eine Spannung derart anzulegen, dass der Stromverlauf und/oder der Spannungsverlauf und/oder der maximale Strom und/oder die maximale Spannung an den Elektroden 120 anliegt.

Es kann vorgesehen sein, dass das Steuergerät 130 eingerichtet ist, eine Festlegung von einer Länge und/oder einer Häufigkeit eines Reinigungszyklus zu treffen und den Reinigungszyklus durchzuführen. Dabei kann es beispielsweise sein, dass im normalen Betrieb die erste Elektrode 121 positiv und die zweite Elektrode 122 negativ geladen ist. Negativ geladene Ionen lagern sich also an der ersten Elektrode und positiv geladene Ionen an der zweiten Elektrode an. Wird mittels des Sensors 110 nun detektiert, dass eine bestimmte Art von Ionen, die die Elektroden 120 besonders schnell zusetzen, vorhanden ist, so ist das Steuergerät 130 eingerichtet, den nächsten Reinigungszyklus zum Beispiel eher anzustoßen als wenn diese Ionen nicht im Wasser vorhanden wären. Während des Reinigungszyklus ist die zweite Elektrode 122 positiv und die erste Elektrode 121 negativ geladen, sodass die im Normalbetrieb angelagerten Ionen nun von den Elektroden 120 abgestoßen werden.

Es kann vorgesehen sein, dass die an den Elektroden 120 der Vorrichtung 100 zum kapazitiven Deionisieren von Wasser angelegte Spannung anhand der im Wasser gelösten Ionen ausgewählt wird. Dabei kann es vorgesehen sein, dass die an den Elektroden 120 angelegte Spannung indirekt proportional zur spezifischen Ladung der im Wasser gelösten Ionen ist. Ein Ion 103, welches nahe der zweiten Elektrode 122 innerhalb des Fließkanals 101 durch das durchfließende Wasser mitbewegt wird und welches von der ersten Elektrode 121 angezogen wird, muss innerhalb einer Länge 123 der ersten Elektrode 121 die erste Elektrode 121 erreichen. Je kleiner die spezifische Ladung des Ions 103 ist, umso größer muss die angelegte Spannung sein, damit das Ion 103 die erste Elektrode 121 noch erreichen kann. Alternativ kann die an die Elektroden 120 angelegte Spannung direkt proportional zur Masse des im Wasser gelösten Ions 103 sein. Je größer die Masse des Ions 103 ist, umso weniger lässt es sich bei einer bestimmten an den Elektroden 120 angelegten Spannung von dieser beeinflussen. Um die erste Elektrode 121 zu erreichen, muss die angelegte Spannung also für schwere Ionen 103 größer sein als für leichte Ionen.

Fig. 2 zeigt ein Ablaufdiagramm 150, bei dem zunächst in einem ersten Verfahrensschritt 151 eine Art und/oder eine Konzentration von im Wasser vorhandenen Ionen detektiert wird. In einem zweiten Verfahrensschritt 152 wird eine Betriebsstrategie der Vorrichtung 100 zum kapazitiven Deionisieren von Wasser anhand der Art und/oder der Konzentration der im Wasser vorhandenen Ionen ausgewählt. Ebenfalls in Fig. 2 dargestellt ist, dass optional das Verfahren nach einer vorgegebenen Zeitspanne wiederholt wird und die Verfahrensschritte erneut ausgewählt werden, wobei nun im zweiten Verfahrensschritt 152 die Betriebsstrategie beibehalten oder geändert wird.

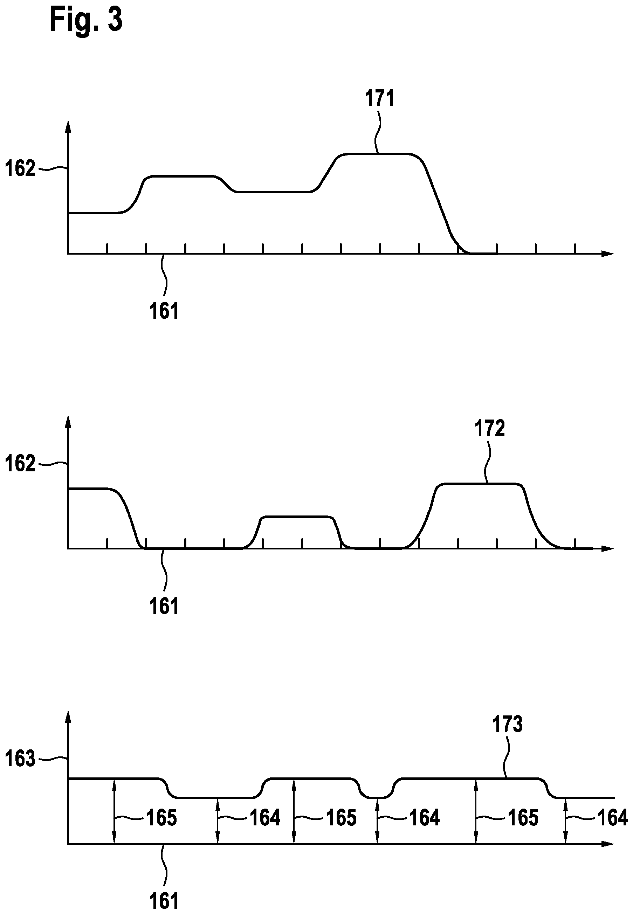

Fig. 3 zeigt einen ersten Verlauf 171 einer Konzentration eines ersten Ions, die mittels des Sensors 110 gemessen werden kann. Der erste Verlauf 171 ist dabei als Konzentration 162 über Zeit 161 aufgetragen. Direkt unterhalb ist in Fig. 3 ein zweiter Verlauf 172 einer Konzentration eines zweiten Ions dargestellt, bei dem ebenfalls die Konzentration 162 über Zeit 161 aufgetragen ist. Darunter dargestellt ist ein Spannungsverlauf 173 für die an den Elektroden 120 angelegte Spannung, die anhand der Betriebsstrategie vom Steuergerät 130 ausgewählt wurde. Der Spannungsverlauf 173 ist als Spannung 163 über Zeit 161 aufgetragen. Beim ersten Verlauf 171 beziehungsweise zweiten Verlauf 172 sind Messpunkte markiert, wobei die Messpunkte an der Stelle angeordnet sind, an der das Verfahren wiederholt wird. Die in diesen Verläufen gezeigten Ionen sind derart, dass zum Entfernen der ersten Ionen des ersten Verlaufs 171 eine niedrigere Spannung notwendig ist als zur Entfernung der zweiten Ionen des zweiten Verlaufs 172. Entsprechend ist zu den Zeiten, zu denen die Konzentration 162 des zweiten Verlaufs 172 Null oder nahezu Null ist, eine erste Spannung 164 und zu den Zeiten, an denen der zweite Verlauf 172 eine Konzentration der zweiten Ionen ausweist, eine zweite Spannung 165 an den Elektroden 120 angelegt, wobei die zweite Spannung 165 größer als die erste Spannung 164 ist. Die Messpunkte geben dabei die vorgegebene Zeitspanne wieder. Je kürzer die vorgegebene Zeitspanne ist, desto genauer kann auf Schwankungen der Konzentrationen des ersten Verlaufs 171 beziehungsweise des zweiten Verlaufs 172 reagiert werden.

Obwohl die Erfindung im Detail durch die bevorzugten Ausführungsbeispiele beschrieben wurde, ist die Erfindung nicht auf die offenbarten Beispiele eingeschränkt und andere Variationen können hieraus vom Fachmann abgeleitet werden, ohne den Schutzumfang der Erfindung zu verlassen.

## Patentansprüche

1. Verfahren zum kapazitiven Deionisieren von Wasser, wobei eine Art und/oder eine Konzentration (162) von im Wasser vorhandenen Ionen detektiert wird und wobei eine Betriebsstrategie einer Vorrichtung (100) zum kapazitiven Deionisieren von Wasser anhand der Art und/oder der Konzentration (162) der im Wasser vorhandenen Ionen ausgewählt wird.

2. Verfahren nach Anspruch 1, wobei die Betriebsstrategie einen Stromverlauf und/oder einen Spannungsverlauf (173) und/oder einen maximalen Strom und/oder eine maximale Spannung umfasst.

3. Verfahren nach Anspruch 1 oder 2, wobei die Betriebsstrategie eine Festlegung von Länge und/oder Häufigkeit eines Reinigungszyklus umfasst.

4. Verfahren nach einem der Ansprüche 1 bis 3, wobei eine an Elektroden (120) der Vorrichtung (100) zum kapazitiven Deionisieren von Wasser angelegte Spannung (163, 164, 165) anhand der Art der im Wasser gelösten Ionen ausgewählt wird.

5. Verfahren nach Anspruch 4, wobei die angelegte Spannung (163, 164, 165) indirekt proportional zur spezifischen Ladung der im Wasser gelösten Ionen ist.

6. Verfahren nach Anspruch 4, wobei die angelegte Spannung (163, 164, 165) direkt proportional zur Masse der im Wasser gelösten Ionen ist.

7. Verfahren nach einem der Ansprüche 1 bis 6, wobei die Art und/oder die Konzentration (162) der im Wasser vorhandenen Ionen nach Ablauf einer vorgegebenen Zeitspanne erneut detektiert wird und die Betriebsstrategie der Vorrichtung (100) zum kapazitiven Deionisieren von Wasser anhand der Art und/oder der Konzentration (162) der im Wasser vorhandenen Ionen nach Ablauf der vorgegebenen Zeitspanne angepasst wird.

8. Vorrichtung (100) zum kapazitiven Deionisieren von Wasser, aufweisend einen Sensor (110), zwei Elektroden (120) und ein Steuergerät (130), wobei mit dem Sensor (110) eine Art und/oder eine Konzentration (162) von im Wasser vorhandenen Ionen detektiert werden kann, wobei an die Elektroden (120) eine Spannung (163, 164, 165) angelegt werden kann, wobei das Steuergerät (130) eingerichtet ist, anhand der mittels des Sensors (110) ermittelten Art und/oder Konzentration (162) der im Wasser vorhandenen Ionen eine Betriebsstrategie auszuwählen.

9. Vorrichtung (100) nach Anspruch 8, wobei die Betriebsstrategie einen Stromverlauf und/oder einen Spannungsverlauf (173) und/oder einen maximalen Strom und/oder eine maximale Spannung umfasst und wobei das Steuergerät (130) eingerichtet ist, an die Elektroden (120, 121, 122) eine Spannung (163, 164, 165) derart anzulegen, dass der Stromverlauf und/oder der Spannungsverlauf (173) und/oder der maximale Strom und/oder die maximale Spannung an den Elektroden (120) anliegt.

10. Vorrichtung (100) nach einem der Ansprüche 8 oder 9, wobei das Steuergerät (130) eingerichtet ist, eine Festlegung von einer Länge und/oder einer Häufigkeit eines Reinigungszyklus zu treffen und den Reinigungszyklus durchzuführen.
